Europäisches Patentamt

European Patent Office

Office européen des brevets

(11) Veröffentlichungsnummer: **0 467 127 A2**

# EUROPÄISCHE PATENTANMELDUNG

(21) Anmeldenummer: **91110666.4**

(51) Int. Cl.5: **G01N 15/02**, G01P 5/00

(22) Anmeldetag: **27.06.91**

(30) Priorität: **16.07.90 DE 4022555**
**29.11.90 DE 4038035**

(43) Veröffentlichungstag der Anmeldung:
**22.01.92 Patentblatt 92/04**

(84) Benannte Vertragsstaaten:
**CH DE FR GB IT LI**

(71) Anmelder: **Schroff, Gerhart**
**Starenweg 6**
**W-7053 Kernen(DE)**

Anmelder: **Stetter, Michael**
**Am Hohenstein 4**

**W-7064 Remshalden(DE)**

(72) Erfinder: **Schroff, Gerhart**
**Starenweg 6**
**W-7053 Kernen(DE)**
Erfinder: **Stetter, Michael**
**Am Hohenstein 4**
**W-7064 Remshalden(DE)**

(74) Vertreter: **Wolf, Eckhard, Dr. et al**
**Patentanwälte Dr. Eckhard Wolf, Dr.**
**Johannes Lutz, Eugensplatz 5, Postfach 13**
**10 01**
**W-7000 Stuttgart 1(DE)**

(54) Verfahren und Anordung zur optischen Erfassung und Auswertung von Streulichtsignalen.

(57) Die Erfindung betrifft ein Verfahren und eine Anordnung zur optischen Erfassung und Auswertung von Streulicht, das an mindestens einer durch ein mit Primärlicht (3) beaufschlagtes Meßvolumen (2) hindurchbewegten Partikel gestreut, in einem räumlich wechselnden Hell-Dunkel-Feld unter Erzeugung eines mit einer Schwebung überlagerten pulsförmigen Streulichtsignals moduliert und in einem Fotoempfänger (9) zum Zwecke der Auswertung in ein entsprechend moduliertes pulsförmiges elektrisches Meßsignal umgewandelt wird. Um die Erzeugung und Auswertung des modulierten Streulichtsignals bewegter Partikel zu vereinfachen und zu verbessern wird gemäß der Erfindung vorgeschlagen, daß das Meßvolumen (2) im wesentlichen gleichmäßig mit dem Primärlicht (3) ausgeleuchtet und auf ein außerhalb des Meßvolumens angeordnetes optisches Element (7) mit räumlich wechselnder Lichtdurchlässigkeit oder Reflexionsfähigkeit optisch abgebildet wird, und daß das aus dem Meßvolumen (2) austretende Streulicht an dem externen optischen Element (7) unter Erzeugung des Streulichtsignals moduliert und in dieser Form dem Fotoempfänger (9) zugeleitet wird.

Fig. 1

EP 0 467 127 A2

Die Erfindung betrifft ein Verfahren und eine Anordnung zur optischen Erfassung und Auswertung von Streulicht, das an mindestens einer durch ein mit Primärlicht beaufschlagtes Meßvolumen hindurchbewegten Partikel gestreut, in einem räumlich wechselnden Hell-Dunkel-Feld unter Erzeugung eines mit einer Schwebung überlagerten pulsförmigen Streulichtsignals moduliert und in einem Fotoempfänger zum Zwecke der Auswertung in ein entsprechend moduliertes, pulsförmiges elektrisches Meßsignal umgewandelt wird.

Ziel der Erfindung ist es, die Geschwindigkeit, die Flugrichtung und die Größe der Partikel anhand des Streulichtsignals auf optischem Wege berührungsfrei zu bestimmen. Damit ist es möglich, im mikroskopischen Bereich Geschwindigkeitsverteilungen in strömenden Medien, Durchflußmengenmessungen, Windkanalmessungen und dergleichen durchzuführen.

Bekannte Verfahren dieser Art werden besonders in optischen Velocimetern eingesetzt, also in optischen Meßsystemen zur lokalen berührungslosen Geschwindigkeitsmessung von Fluiden. Kleine mit der Fluidströmung mitbewegte Partikel streuen dort beim Durchqueren eines räumlich-periodischen Hell-Dunkel-Streifenfeldes Licht, welches mit einer Linse auf einen Fotodetektor (Fotodiode) fokussiert wird. Bei der fortschreitenden Bewegung der Partikel sieht der Detektor einen mit einer Schwebungsfrequenz f modulierten Lichtpuls, aus dessen Schwebungsfrequenz bei Kenntnis des Streifenabstandes $\delta y$ des Hell-Dunkel-Feldes die Partikelgeschwindigkeit $v_s$ senkrecht zum Streifenabstand wie folgt bestimmt werden kann:

$$v_s = f\, \delta y \qquad (1)$$

Im Falle der Laser-Doppler-Anemometrie wird der Ausgangsstrahl eines Lasers mit einem optischen Strahlteiler in zwei Teilstrahlen aufgeteilt und diese anschließend mit einer Linse in deren Brennpunkt zum Schnitt gebracht. Das Schnittvolumen der Laserstrahlen stellt das Meßvolumen dar, das von den Streupartikeln durchflogen wird. Das Meßvolumen wird hierbei von einem System von Interferenzstreifen durchzogen, deren Abstand $\delta y$ durch die Wellenlänge des Laserlichts und den Schnittwinkel der Laserstrahlen gegeben ist. Zur Auswertung gelangen bei den genannten Meßverfahren Lichtpulse mit einer im Idealfall die Gestalt einer Gauß-Kurve aufweisenden Einhüllenden, die mit der Schwebungsfrequenz f moduliert ist. Zur Auswertung werden die Lichtpulse in einem Fotodetektor empfangen und in elektrische Analogsignale umgesetzt. Die Analogsignale werden häufig in einem Analog/Digitalwandler digitalisiert und einem Computer zur Auswertung (Frequenzbestimmung) zugeführt.

Bei den bekannten Laser-Doppler-Anemometern wird als nachteilig empfunden, daß zur Erzeugung des Hell-Dunkel-Musters zwei kohärente Teilstrahlen erforderlich sind, die vom gleichen Laser kommen und die über eine geeignete Abbildungsoptik im Meßvolumen unter Bildung des Interferenzmusters zur Überlagerung gebracht werden müssen. Es ist dazu eine sehr aufwendige und empfindliche optische Anordnung erforderlich.

Weiter ist ein optisches Velocimeter bekannt, bei welchem unter Verwendung eines Laserdioden-Arrays die Lichtquelle in viele feine Bereiche unterteilt und über eine geeignete Beleuchtungsoptik unter Bildung des Hell-Dunkel-Musters in das Meßvolumen abgebildet wird. Zur Erzeugung des Hell-Dunkel-Musters ist hier zwar kein kohärentes Licht erforderlich, jedoch sind die erforderlichen Laserdioden-Arrays kompliziert aufgebaut und recht teuer.

Neben der Partikelgeschwindigkeit kann bisher nur bei relativ aufwendigen und daher teuren LDA-Geräten die Partikelgröße bestimmt werden. Hierzu wird ein Beugungseffekt ausgenutzt, der bei kleinen und großen Partikeln zu unterschiedlichen Interferenzbildern führt. Um unterschiedlich große Partikel in ihrem Intensitätsmaximum zu erfassen, müssen daher Detektoren in paarweiser Anordnung im Raum bewegt werden, was mit einem erheblichen Aufwand verbunden ist. Mit den bekannten Laser-Array-Velocimetern ist bisher keine Größenbestimmung der Partikel möglich.

Der Erfindung liegt die Aufgabe zugrunde, ein Verfahren und eine Anordnung der eingangs angegebenen Art zu entwickeln, womit die Erzeugung und Auswertung des modulierten Streulichtsignals bewegter Partikel vereinfacht und zugleich verbessert werden kann.

Zur Lösung dieser Aufgabe werden die in den Ansprüchen 1 bzw. 25 angegebenen Merkmalskombinationen vorgeschlagen. Weitere vorteilhafte Ausgestaltungen und Weiterbildungen der Erfindung ergeben sich aus den abhängigen Ansprüchen.

Die erfindungsgemäße Lösung geht vor allem von dem Gedanken aus, daß das signalmodulierende Hell-Dunkel-Feld nicht unbedingt im Meßvolumen selbst erzeugt werden muß, sondern in den Strahlengang der Abbildungsoptik gelegt werden kann, so daß die Beleuchtungsoptik einschließlich der Lichtquelle erheblich vereinfacht wird. Um dies zu erreichen, wird gemäß der Erfindung vorgeschlagen, daß das Meßvolumen im wesentlichen gleichmäßig mit dem Primärlicht ausgeleuchtet und auf ein außerhalb des Meßvolumens angeordnetes optisches Element mit räumlichwechselnder Lichtdurchlässigkeit oder Reflexionsfähigkeit optisch abgebildet wird und daß das aus dem Meßvolumen austretende Streulicht an dem optischen Element unter Erzeugung des Streulichtsignals moduliert und danach zum Fotoempfänger geleitet wird. Das Meßvolumen kann zu diesem Zweck mit inkohärentem und auch nichtmonochromatischem Primärlicht ausgeleuchtet werden.

Gemäß einer bevorzugten Ausgestaltung der Erfindung wird das Meßvolumen auf ein das optische Element bildendes Strichmuster mit variierender Lichtdurchlässigkeit oder Reflexionsfähigkeit abgebildet. Das Strichmuster kann dabei beispielsweise als optisches Strichgitter, als LCD-Array oder als optisches Speicher-Array ausgebildet werden. Um die Auswertung des modulierten Meßsignals zu erleichtern, werden die transparenten und nicht-transparenten Bereiche des Strichmusters vorteilhafterweise gleichbreit gewählt. Aus dem gleichen Grund ist es vorteilhaft, wenn der Strichabstand über das gesamte Strichmuster konstant ist.

Da mit dem beschriebenen Verfahren nur die Geschwindigkeitskomponente senkrecht zur Strichrichtung des Strichmusters bestimmt werden kann, ist es grundsätzlich möglich, die Ausrichtung des Strichmusters abwechselnd umzusteuern. Im Falle elektronischer Strichmuster, wie LCD- oder Speicher-Arrays kann die Ausrichtung des Strichmusters durch elektronische Mittel unter Beeinflussung der lokalen Absorptions- bzw. Transmissionseigenschaften des optischen Elements umgesteuert werden. Vor allem bei optischen Speicher-Arrays können hierbei sehr hohe Umsteuer-Frequenzen erzielt werden (Parthenopoulos et al. "Three-dimensional Optical Storage Memory", Science, Vol. 245, 1989, Seiten 843 bis 845).

Zur Bestimmung der Schwebungsfrequenz und der daraus ableitbaren Partikelgeschwindigkeit wird das Meßsignal vorzugsweise mit einer schnellen Fouriertransformation in einem Computer oder einem geeigneten Prozessor ausgewertet.

Zur Bestimmung einer weiteren Geschwindigkeitskomponente der Partikelgeschwindigkeit kann das Meßvolumen gemäß einer vorteilhaften Ausgestaltung der Erfindung auf ein gegenüber dem optischen Element hinsichtlich seiner räumlich-periodischen Lichtdurchlässigkeit oder Reflexionsfähigkeit anders, vorzugsweise senkrecht ausgerichtetes zweites optisches Element optisch abgebildet werden, wobei das an dem zweiten optischen Element modulierte Streulichtsignal einem zweiten Fotoempfänger zur Erzeugung eines zweiten Meßsignals zugeleitet werden kann.

Um die im Meßsignal enthaltene Information über die Partikelgröße auswerten zu können, muß sichergestellt sein, daß die das Meßsignal erzeugende Partikel vollständig im Meßvolumen enthalten ist und die Ränder des Meßvolumens nicht übergreift. Um dies festzustellen, wird gemäß einer bevorzugten Ausgestaltung der Erfindung folgende Verfahrensweise vorgeschlagen:

- das Meßvolumen wird auf ein ein Teilvolumen des Meßvolumens ausblendendes optisches Referenzelement optisch abgebildet,
- das durch das Referenzelement durchtretende bzw. an diesem reflektierte Streulicht wird zu einem Referenzempfänger geleitet und in diesem in ein elektrisches Referenzsignal umgewandelt,
- das Meßsignal und das Referenzsignal werden zur Erzeugung eines bei Vorhandensein einer Partikel im Teilvolumen aktiven Partikelerkennungssignal logisch miteinander verknüpft.

Bei aktivem Partikelerkennungssignal kann dementsprechend der relative Amplitudenverlauf des Meßsignals zur Bestimmung der Partikelgröße ausgewertet werden. Insbesondere ist es möglich, daß die Partikelgröße bei bekanntem Streifenabstand des optischen Elements als Funktion der relativen Welligkeit, insbesondere als Funktion des Verhältnisses zwischen den Amplituden der Einhüllenden und der Schwebung des Meßsignals bestimmt wird.

Weiter ist es bei aktivem Partikelerkennungssignal möglich, die räumliche Intensitätsverteilung des von der Partikel ausgesandten Streulichts $I_s(y)$ senkrecht zum jeweiligen Strichmuster (y-Richtung) aus dem Meßsignal S(t) nach folgender Beziehung zu bestimmten:

$$I_s(y) \;=\; F^{-1}(F(S)\cdot(F(g))^{-1})(y) \qquad (2)$$

wobei g die Gitterfunktion des Strichgitters in y-Richtung, F die Fouriertransformierte und $F^{-1}$ die inverse Fouriertransformation bedeuten. Die Partikelgröße kann dann aus der räumlichen Intensitätsverteilung $I_s(y)$ des von der Partikel ausgesandten Streulichts bestimmt werden. Bei Kenntnis der zwei- oder dreidimensionalen Intensitätsverteilung, die hier aufgrund weiterer Messungen unter Verwendung zusätzlicher, nichtparalleler Strichgitter bestimmt werden kann, ist es grundsätzlich auch möglich, die zwei- oder dreidimensionale Partikelform zu bestimmen.

In einer bevorzugten Anordnung zur Durchführung des erfindungsgemäßen Verfahrens ist das Meßvolumen über eine Primärlichtquelle im wesentlichen gleichmäßig mit Primärlicht ausleuchtbar und über eine

EP 0 467 127 A2

Abbildungsoptik und eine im Strahlengang der Abbildungsoptik angeordnete, das Meßvolumen begrenzende Blende auf ein außerhalb des Meßvolumens angeordnetes optisches Element mit räumlichwechselnder Lichtdurchlässigkeit oder Reflexionsfähigkeit optisch abbildbar, wobei der Fotoempfänger dem optischen Element so zugeordnet ist, daß er das von diesem durchgelassene oder reflektierte Licht räumlich integrierend aufnimmt.

Um eine zweidimensionale Auflösung bei der Geschwindigkeitsmessung zu erhalten, wird das Meßvolumen über einen im Strahlengang der Abbildungsoptik hinter der Blende angeordneten Strahlteiler auf ein gegenüber dem optischen Element hinsichtlich seiner räumlich-wechselnden Lichtdurchlässigkeit oder Reflexionsfähigkeit anders, vorzugsweise senkrecht ausgerichtetes zweites optisches Element optisch abgebildet, wobei dem zweiten optischen Element ein zweiter Fotoempfänger so zugeordnet ist, daß er das von diesem durchgelassene oder reflektierte Licht aufnimmt.

Um feststellen zu können, ob eine Partikel vollständig im Meßvolumen enthalten ist, wird gemäß einer weiteren bevorzugten Ausgestaltung der Erfindung vorgeschlagen, daß das Meßvolumen über einen im Strahlengang der Abbildungsoptik hinter der Blende angeordneten Strahlteiler auf ein ein Teilvolumen des Meßvolumens ausblendendes optisches Referenzelement optisch abgebildet wird, wobei dem Referenzelement ein Referenzempfänger so zugeordnet ist, daß er das durch dieses durchtretende oder an diesem reflektierte Licht räumlich integrierend aufnimmt und in ein elektrisches Referenzsignal umwandelt. Weiter ist hierbei eine mit dem Meßsignal und dem Referenzsignal beaufschlagte Verknüpfungslogik vorgesehen, an deren Ausgang ein bei Vorhandensein einer Partikel im Teilvolumen aktives Partikelerkennungssignal abgreifbar ist.

Eine weitere vorteilhafte Ausgestaltung der Erfindung sieht eine mit dem Meßsignal und dem Partikelerkennungssignal beaufschlagbare Auswerteschaltung vor, die zur Bestimmung der Partikelgröße in Abhängigkeit von der relativen Welligkeit, insbesondere als Funktion des Amplitudenverhältnisses zwischen Einhüllender und Schwebung des Meßsignals vorgesehen ist.

Gemäß einer weiteren bevorzugten Ausgestaltung der Erfindung kann die räumlich-wechselnde Lichtdurchlässigkeit oder Reflexionsfähigkeit des optischen Elements zum Zwecke der Richtungsdiskriminierung unsymmetrisch ausgebildet sein. Dies kann dadurch bewirkt werden, daß auf einer Seite des Strichmusters mindestens ein transparenter oder nicht transparenter Strich fehlt, d.h. durch einen komplementären Strich ersetzt ist.

Zum Zwecke der Richtungsdiskriminierung kann auch das Referenzelement und der zugehörige Referenzempfänger mindestens zweigeteilt werden, wobei die an den Teilempfängern abgreifbaren Referenzsignale sich zu dem Gesamt-Referenzsignal ergänzen.

Eine weitere, besonders wirkungsvolle und einfach realisierbare Möglichkeit zur Richtungsdiskriminierung ergibt sich, wenn das aus dem Meßvolumen austretende Streulicht an einem Strahlteiler mit räumlich veränderlichem Transmissions- und Reflexionsvermögen in einen durchgelassenen und einen reflektierten Teil aufgeteilt und je einem Fotoempfänger zugeleitet wird, und wenn der zeitliche Intensitätsverlauf der an den Fotoempfängern abgegriffenen Meßsignale beispielsweise durch Quotienten- oder Differenzbildung miteinander verknüpft wird. Der zeitliche Verlauf dieses so gebildeten Quotienten- oder Differenzsignals bildet ein eindeutiges Kriterium für die Richtung der Geschwindigkeitskomponente parallel zur Richtung des Gradienten des Transmissions- bzw. Reflexionsvermögens des variablen Strahlteilers. Die Transmissions- und Reflexionsfähigkeit des Strahlteilers sollte in der genannten Raumrichtung entweder stetig oder sprunghaft monoton variieren. Das das Streulicht emittierende Meßvolumen kann dabei entweder auf den Strahlteiler oder über den Strahlteiler auf die beiden Fotoempfänger abgebildet bzw. fokussiert werden. Diese Meßmethode zur Richtungsdiskriminierung eignet sich grundsätzlich für alle Meßanordnungen, in denen das Streulichtsignal bewegter Partikel optisch erfaßt und ausgewertet wird, also auch für die Laser-Doppler-Anemometrie.

Bei einer Anordnung zur optischen Erfassung und Auswertung von Streulicht, das an mindestens einer durch ein mit Primärlicht beaufschlagtes Meßvolumen hindurchbewegten Partikel gestreut und in einem Fotoempfänger zum Zwecke der Auswertung in ein entsprechendes elektrisches Meßsignal umwandelbar ist, wird gemäß einer alternativen Ausgestaltung der Erfindung vorgeschlagen, daß das Meßvolumen im wesentlichen gleichmäßig mit Primärlicht ausgeleuchtet und über eine Abbildungsoptik und eine im Strahlengang der Abbildungsoptik angeordnete, das Meßvolumen begrenzende Blende auf ein außerhalb des Meßvolumens angeordnetes optisches Element mit einer Vielzahl von im Abstand voneinander angeordneten Fotoempfangselementen abgebildet wird und daß das auf das optische Element gelangende Streulicht in den Fotoempfangselementen in der zeit- und ortsabhängigen Partikelbewegung entsprechende Meßsignale umgewandelt wird. Das optische Element kann dabei beispielsweise ein die Fotoempfangselemente enthaltendes, ein- oder zweidimensionales Fotodioden-Array oder einen entsprechenden CCD-Bildempfänger aufweisen. Die von den Fotoempfangselementen abgegebenen Meßsignale werden vorteil-

4

hafterweise in einer Auswerteelektronik zur Bestimmung der Partikelgeschwindigkeit und/oder Partikelgröße und/oder Partikelform ausgewertet.

Im folgenden wird die Erfindung anhand der Zeichnung näher erläutert. Es zeigen:

| | |
|---|---|
| Fig. 1 | ein optisches Strichgitter-Anemometer in schematischer schaubildlicher Darstellung; |
| Fig. 2 | einen Ausschnitt aus dem Strahlengang nach Fig. 1 mit zusätzlichem Zweig für die Partikelerkennung; |
| Fig. 3a, b und c | den prinzipiellen Verlauf eines pulsförmigen, mit einer Schwebung überlagerten Signals ohne und mit Richtungsdiskriminierung; |
| Fig. 4 | eine Draufsicht auf ein zweigeteiltes optisches Referenzelement gemäß Fig. 2; |
| Fig. 5a, b und c | Diagramm des Meßsignals und zweier Referenzsignale; |
| Fig. 6 | Schema einer Verknüpfungslogik zur Erkennung, ob eine Partikel vollständig im Teilvolumen enthalten ist; |
| Fig. 7a, b und c | Ausschnitte aus einem Strichgitter mit Leuchtfleck zur Zeit $T_0$ und $T_1$ sowie zugehöriges Meßsignal-Diagramm für drei verschiedene Partikelgrößen. |

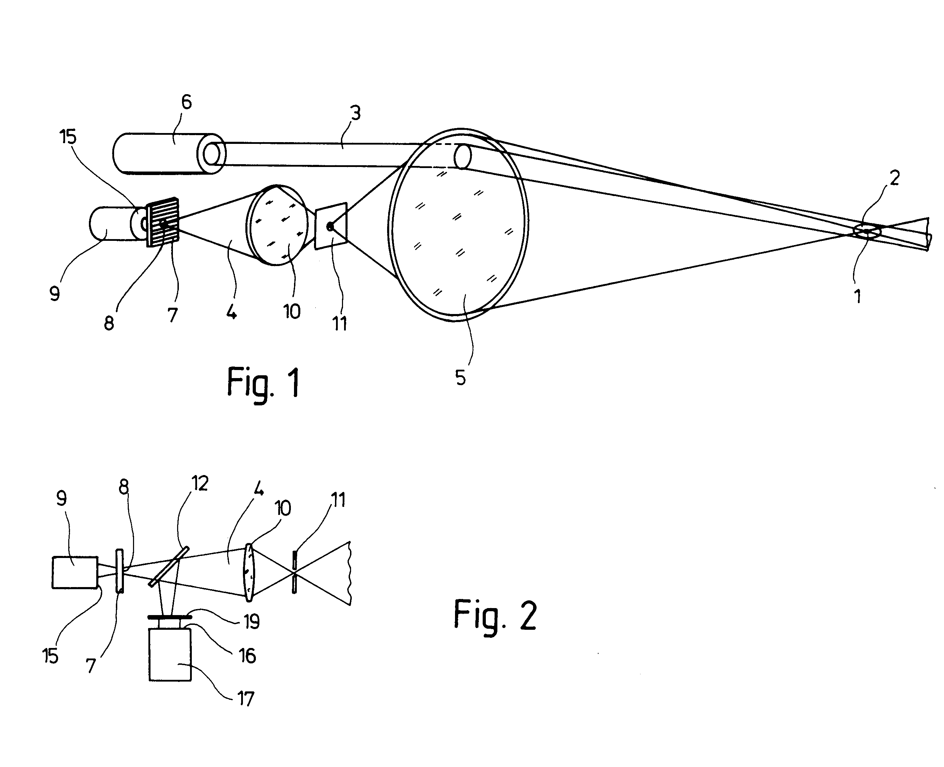

Das in den Fig. 1 und 2 schematisch dargestellte Strichgitter-Anemometer ist zur Bestimmung der Geschwindigkeit und der Größe von bewegten Partikeln in Flüssigkeits- oder Gasströmungen bestimmt. Die optische Anordnung enthält eine Lichtquelle 6, z.B. einen Laser, Leuchtdioden und dergleichen, mit der über einen Primärlicht-Strahl 3 ein Meßvolumen 2 beleuchtet wird. Das Meßvolumen 2, wird über Linsen 5 und 10 auf ein als Strichgitter ausgebildetes optisches Element 7 abgebildet. Im Strahlengang zwischen den beiden Linsen 5 und 10 befindet sich eine Blende 11, mit der Streulicht außerhalb des Meßvolumens 2 unterdrückt wird und die somit den maximal abbildbaren Bereich festlegt. Das optische Element 7 weist ein im gezeigten Ausführungsbeispiel horizontales Streifenmuster mit Regionen hoher und niedriger Transparenz auf. Bei einem als Strichgitter ausgebildeten optischen Element 7, dessen Streifen hoher und geringer Transparenz alle die gleiche Breite besitzen, spielt sich beim Durchqueren einer Partikel durch das beleuchtete Meßvolumen folgender Vorgang ab:

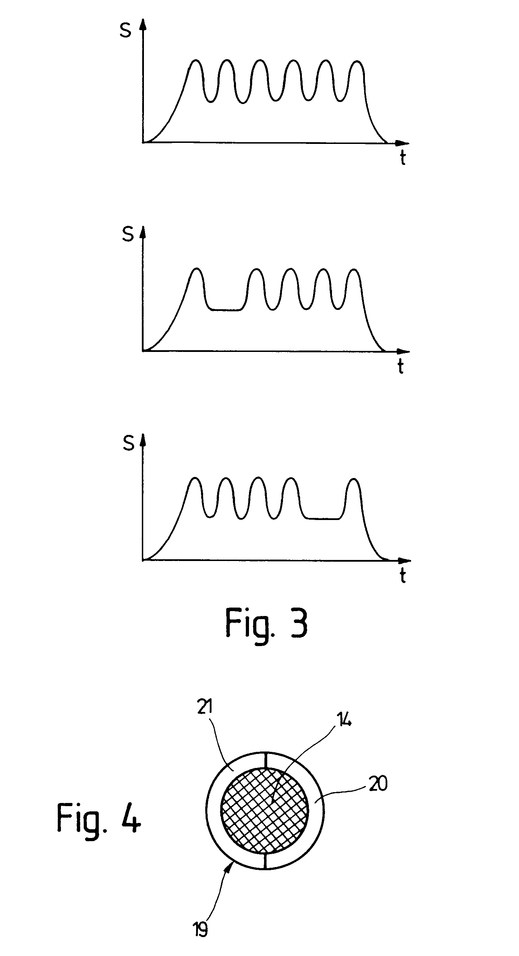

Das von der Partikel emittierte Streulicht erzeugt auf dem optischen Element 7 einen wandernden Leuchtfleck 8, der auf der lichtempfindlichen Fläche 15 der Fotodiode 9 ein durch das Gitter moduliertes Streulichtsignal entsprechend Fig. 3a erzeugt. Die Schwebungsfrequenz des Streulichtsignals ist proportional zu der zur Ausrichtung der Gitterstriche vertikalen Geschwindigkeitskomponente der Partikel. Bei bekannter Gitterkonstante $\delta y$ kann somit die vertikale Geschwindigkeitskomponente $v_s$ aus der Schwebungsfrequenz f des Streulichtsignals und dem Abbildungsmaßstab m der Abbildungsoptik wie folgt bestimmt werden:

$$v_s = m \cdot f \cdot \delta y \qquad (1a)$$

Das Streulichtsignal wird in der Fotodiode 9 für die weitere Auswertung in ein elektrisches Meßsignal umgewandelt.

Eine Richtungsdiskriminierung der Partikelbewegung ist beispielsweise dadurch möglich, daß das Strichgitter 7 unsymmetrisch ausgebildet wird, etwa dadurch, daß auf einer Seite des Strichmusters mindestens ein transparenter oder nichttransparenter Strich fehlt, d.h. durch einen komplementären Strich ersetzt ist. Je nach Flugrichtung der Partikel ergeben sich hierbei die aus den Fig. 3b und 3c ersichtlichen Signalformen, aus deren Unsymmetrie somit die Flugrichtung bestimmt werden kann.

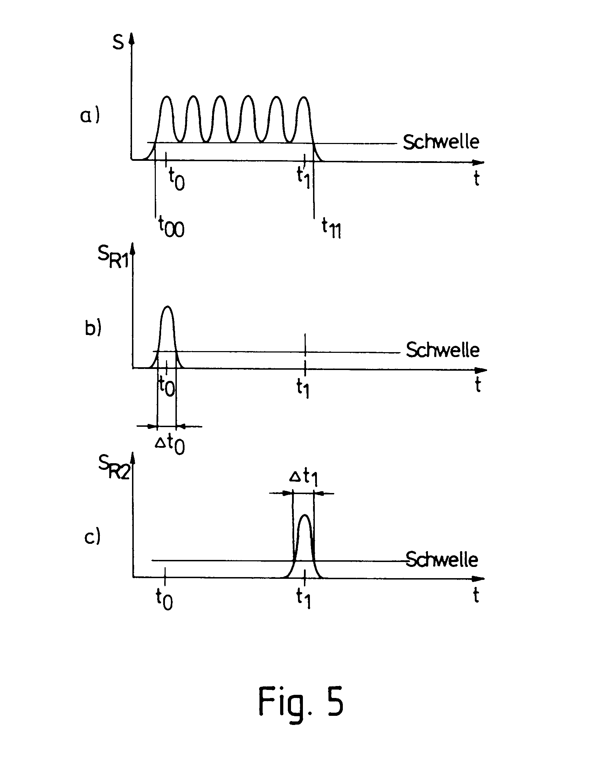

Um zusätzlich die Größe der Partikel bestimmen zu können, wird gemäß Fig. 2 mit Hilfe eines Strahlteilers 12 aus dem Hauptstrahlengang 4 ein Teilstrahl abgezweigt, in welchem ein weiteres optisches Element 19 mit einer diesem zugeordneten Fotodiode 17 mit empfindlicher Detektorfläche 16 angeordnet ist. Wie aus Fig. 4 zu ersehen ist, weist das optische Element 19 einen zentralen Bereich 14 geringer Transparenz und Bereiche hoher Transparenz 20 und 21 auf. Der Bereich 14 ist so gewählt, daß das Bild von Partikeln, die sich in dem Teilvolumen 1 des Meßvolumens 2 befinden, vollständig auf dem Bereich 14 abgebildet werden und damit in der Diode 17 kein aktives Signal erzeugen. Der Bereich 14 entspricht somit flächenmäßig dem Bild des Teilvolumens 1. Befindet sich eine Partikel nun nicht vollständig im Teilvolumen 1, sondern reicht teilweise auch in den Bereich 2, so beleuchtet der betreffende Leuchtfleck den Bereich hoher Transparenz 20 bzw. 21 des optischen Elements 19 und erzeugt in der Diode 17 ein aktives Referenzsignal. Mit dieser Anordnung kann festgestellt werden, ob sich eine Partikel vollständig im Teilvolumen 1 befindet oder nicht. Dies ist wichtig für die Größenbestimmung der Partikel, die nur möglich ist, wenn sichergestellt ist, daß das Streulicht der gesamten Partikel beim Meßvorgang erfaßt wird.

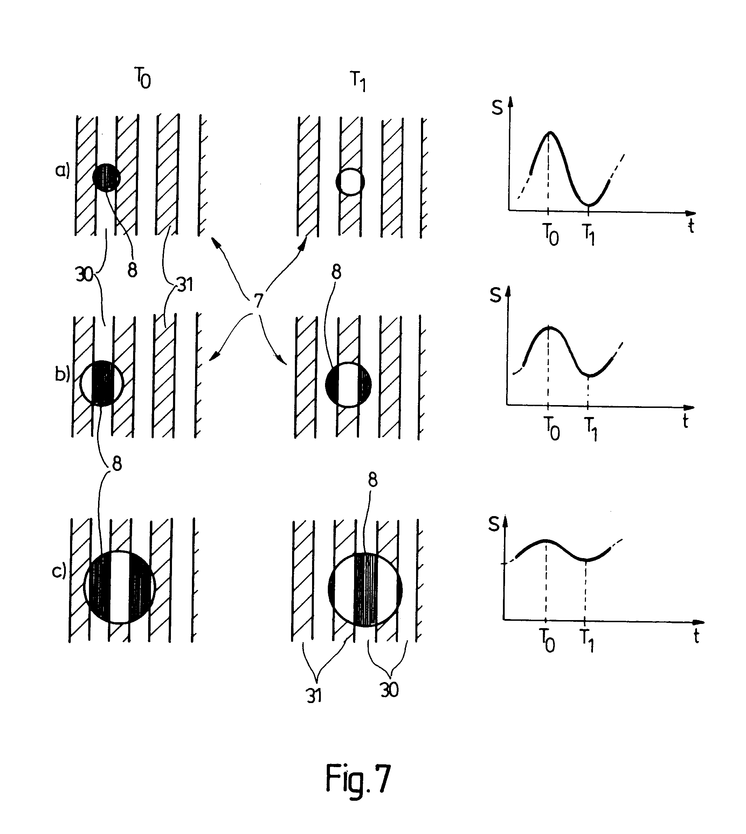

Wie anhand der Fig. 7a, b, und c zu erkennen ist, kann die Partikelgröße durch Ausmessung der Welligkeit des Meßsignals bestimmt werden, wenn sichergestellt ist, daß die Partikel sich vollständig im Teilvolumen 1 befindet. Es ist erkennbar, daß nur der Anteil des von der Partikel ausgesandten Streulichts zur Fotodiode 9 gelangt, der durch die transparenten Gitterbereiche 30 des Strichgitters 7 hindurch sichtbar ist, während die von den nichttransparenten Bereichen 31 des Strichgitters verdeckten Partikelteile nicht zum Meßsignal beitragen. Mit anderen Worten bedeutet dies, daß von dem auf dem Gitter 7 befindlichen Leuchtfleck 8 nur jeweils die auf die transparenten Gitterbereiche 30 fallenden Leuchtfleckteile zum Meßsignal beitragen. In Fig. 7 sind für drei verschiedene Partikelgrößen die Leuchtflecke 8 aus der Sicht der Fotodiode 9 in den Zeitpunkten $T_0$ und $T_1$ dargestellt. Beim Durchqueren des Strichgitters ergibt sich dabei jeweils der in Fig. 7 rechts dargestellte Verlauf des Meßsignals S(t). Es ist hieraus ersichtlich, daß die Partikelgröße aus dem Amplitudenverlauf des Meßsignals und dabei insbesondere aus dem Verhältnis der Amplitude der Einhüllenden zur Amplitude der Schwebung berechnet werden kann.

Wie oben bereits erwähnt, weist das optische Element 19 zwei transparente Bereiche 20 und 21 auf, hinter denen voneinander unabhängige Fotodioden zur Erzeugung von Referenzsignalen angeordnet werden können. Grundsätzlich kann das optische Element 19 auch in mehr als zwei Teile mit mehr als zwei Referenzdioden unterteilt werden. Damit ist eine Richtungsdiskriminierung möglich, da die den Segmenten 20 und 21 zugeordneten Referenzdioden in Abhängigkeit von der Flugrichtung der Partikel nacheinander ansprechen.

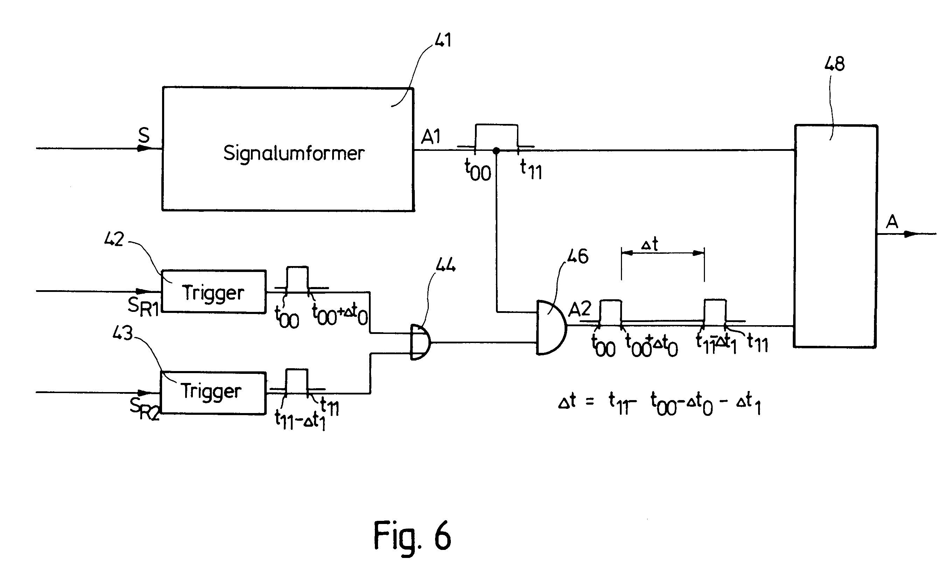

In Fig. 5 sind der zeitliche Verlauf des Meßsignals S der Diode 9 (Diagramm a) und der Referenzsignale $S_{R1}$ und $S_{R2}$ der den transparenten Bereichen 20 und 21 zugeordneten Referenzdioden (Diagramme b und c) dargestellt. Diese Signale können in der in Fig. 6 schematisch dargestellten Verknüpfungslogik zur Ermittlung desjenigen Zeitintervalls $\Delta t$ miteinander verknüpft werden, in welchem eine Partikel sich vollständig im Teilvolumen 1 befindet. Hierzu wird der Signalumformer 41 mit dem Ausgangssignal S der Diode 9 beaufschlagt, während die Trigger 42 und 43 mit den Ausgangssignalen $S_{R1}$ und $S_{R2}$ gemäß Fig. 5b und c der Referenzdioden beaufschlagt werden. An den Ausgängen der Signalumformer 41 bzw. Trigger 42 und 43 sind Rechtecksignale abgreifbar, die der jeweiligen Signallänge entsprechen, so daß bei einer Verknüpfung über das ODER-Gatter 44 und das UND-Gatter 46 ein das Zeitintervall $\Delta t$ wie folgt definierendes Signal am Ausgang A2 abgreifbar ist (Fig.6):

$$\Delta t = t_{11} - t_{00} - \Delta t_0 - \Delta t_1. \qquad (3)$$

Dieses Zeitintervall entspricht dem Zeitraum, in dem die Partikel vollkommen im Teilvolumen 1 enthalten ist, vorausgesetzt, daß das am Ausgang A1 des Signalumformers 41 anstehende Signal über die gesamte Dauer des $\Delta t$-Intervalls aktiv ist. Die Partikelerkennungslogik 48 prüft aufgrund des genannten Kriteriums, ob das zuvor erfaßte Meßsignal S(t) einer Auswertung zuzuführen ist oder nicht und gibt am Ausgang A ein entsprechendes Partikelerkennungssignal ab. Während der Zeit $\Delta t$ kann aus dem Amplitudenverhältnis der Einhüllenden und der Schwebung die Partikelgröße bestimmt werden.

In dem Zeitintervall $[t_{00} + \Delta t_0, t_{11} - \Delta t_1]$ befindet sich die Partikel vollständig innerhalb des Teilvolumens 1 (vergl. Fig. 5 und 6). Das an der Diode 9 abgegriffene Meßsignal kann dann durch ein Faltungsprodukt $g^* I_s$ beschrieben werden. Wenn die x-Richtung parallel zum Strichgitter und die y-Richtung senkrecht zum Strichgitter orientiert ist, so gilt

$$I_S(y) = \int_{\mathbb{R}} I(x,y) dx \qquad (4)$$

wobei I(x,y) die Intensitätsverteilung des durch die Partikel gebildeten Leuchtflecks 8 auf dem optischen Element 7 bedeutet und g die y-Abhängigkeit der Transparenzfunktion des Strichgitters beschreibt (g(y) = 1 für alle transparenten Punkte y und 9(y) = 0 für alle nichttransparenten Gitterpunkte y). Durch die Gleichung (4) wird die ursprünglich zweidimensionale Intensitätsverteilung des Leuchtflecks 8 auf eine eindimensionale Intensitätsverteilung abgebildet.

Das an der Fotodiode 9 abgreifbare Meßsignal S(t) im Zeitintervall $(t_{00} + \Delta t_0, t_{11} - \Delta t_1) =: T$ ist nach dem Faltungssatz der Fouriertransformation wie folgt darstellbar:

$$S(t) = (g*I_s)(t)$$
$$= \int_{\mathbb{R}} g(vt-y) \cdot I_s(y)dy$$
$$= F^{-1}(F(g) \cdot F(I_s))(t), \quad t \in T \qquad (5)$$

wobei v die Geschwindigkeitskomponente des Leuchtflecks 8 auf dem optischen Element 7 in y-Richtung, F die Fouriertransformation und $F^{-1}$ die inverse Fouriertransformation bedeuten.

Damit gilt weiter:

$$F(S) = F(g) \cdot F(I_s)$$
$$F(S) \cdot (F(g))^{-1} = F(I_s)$$
$$F^{-1}(F(S) \cdot (F(g))^{-1}) = I_s \qquad (6)$$

Die Signalfunktion $I_s$ stellt die Intensitätsverteilung des Leuchtflecks 8 in y-Abhängigkeit dar und ist somit ein direktes Maß für die Partikelgröße, wenn die Partikelform (z.B. rotationssymmetrisch) bekannt ist.

Eine Anordnung entsprechend Fig. 2, bei der das Streulicht der durch das Meßvolumen 2 bewegten Partikel über eine Beobachtungsoptik 5, 11, 10 und einen Strahlteiler 12 auf zwei Fotoempfänger 9, 17 abgebildet wird, kann in einfacher Weise auch zur Richtungsdiskriminierung verwendet werden, wenn der Strahlteiler ein räumlich variables Transmissions- und Reflexionsvermögen aufweist. Je nach Position der Partikel im Meßvolumen verändert sich dadurch das Intensitätsverhältnis zwischen dem reflektierten und dem transmittierten Strahl und somit auch das Verhältnis der Ausgangssignale an den Fotodioden 17 und 9. Der zeitliche Verlauf des Quotientensignals bildet ein eindeutiges Kriterium für die Richtung der Geschwindigkeitskomponente der Partikel parallel zur Gradientenrichtung des Teilungsverhältnisses des variablen Strahlteilers 12. Werden mehrere räumlich unterschiedlich orientierte variable Strahlteiler eingesetzt, so können die Richtungen mehrerer Geschwindigkeitskomponenten diskriminiert werden.

**Patentansprüche**

1. Verfahren zur optischen Erfassung und Auswertung von Streulicht, das an mindestens einer durch ein mit Primärlicht beaufschlagtes Meßvolumen hindurchbewegten Partikel gestreut, in einem räumlich wechselnden Hell-Dunkel-Feld unter Erzeugung eines mit einer Schwebung überlagerten pulsförmigen Streulichtsignals moduliert und in einem Fotoempfänger zum Zwecke der Auswertung in ein entsprechend moduliertes pulsförmiges elektrisches Meßsignal umgewandelt wird, **dadurch gekennzeichnet**, daß das Meßvolumen im wesentlichen gleichmäßig mit dem Primärlicht ausgeleuchtet und auf ein außerhalb des Meßvolumens angeordnetes optisches Element mit räumlich wechselnder Lichtdurchlässigkeit oder Reflexionsfähigkeit optisch abgebildet wird, und daß das aus dem Meßvolumen austretende Streulicht an dem optischen Element unter Erzeugung des Streulichtsignals moduliert und in dieser Form dem Fotoempfänger zugeleitet wird.

2. Verfahren nach Anspruch 1, **dadurch gekennzeichnet**, daß das Meßvolumen mit inkohärentem Primärlicht ausgeleuchtet wird.

3. Verfahren nach Anspruch 1 oder 2, **dadurch gekennzeichnet**, daß das Meßvolumen mit nichtmonochromatischem Primärlicht ausgeleuchtet wird.

4. Verfahren nach einem der Ansprüche 1 bis 3, **dadurch gekennzeichnet**, daß das Meßvolumen auf ein das optische Element bildendes Strichmuster mit räumlich wechselnder Lichtdurchlässigkeit oder Reflexionsfähigkeit abgebildet wird.

5. Verfahren nach Anspruch 4, **dadurch gekennzeichnet**, daß das Meßvolumen auf ein das Strichmuster bildendes optisches Strichgitter abgebildet wird.

**6.** Verfahren nach Anspruch 4 oder 5, **dadurch gekennzeichnet**, daß das Meßvolumen auf ein das Strichmuster bildendes LCD-Array abgebildet wird.

**7.** Verfahren nach Anspruch 4 oder 5, **dadurch gekennzeichnet**, daß das Meßvolumen auf ein das Strichmuster bildendes optisches Speicher-Array abgebildet wird.

**8.** Verfahren nach einem der Ansprüche 4 bis 7, **dadurch gekennzeichnet**, daß die transparenten und nichttransparenten Bereiche des Strichmusters gleich breit sind.

**9.** Verfahren nach einem der Ansprüche 4 bis 8, **dadurch gekennzeichnet**, daß der Strichabstand über das gesamte Strichmuster konstant ist.

**10.** Verfahren nach einem der Ansprüche 4 bis 9, **dadurch gekennzeichnet**, daß die Ausrichtung des Strichmusters abwechselnd umgesteuert wird.

**11.** Verfahren nach Anspruch 10, **dadurch gekennzeichnet**, daß die Ausrichtung des Strichmusters durch elektronische Mittel unter Beeinflussung der lokalen Absorptions- bzw. Transmissionseigenschaften des optischen Elements umgesteuert wird.

**12.** Verfahren nach einem der Ansprüche 1 bis 11, **dadurch gekennzeichnet**, daß das Meßsignal zur Bestimmung der Schwebungsfrequenz und der daraus ableitbaren Partikelgeschwindigkeit mit einer schnellen Fouriertransformation ausgewertet wird.

**13.** Verfahren nach einem der Ansprüche 1 bis 12, **dadurch gekennzeichnet**, daß das Meßvolumen auf ein gegenüber dem optischen Element hinsichtlich seiner räumlichperiodischen Lichtdurchlässigkeit oder Reflexionsfähigkeit anders, vorzugsweise senkrecht, ausgerichtetes zweites optisches Element optisch abgebildet wird, und daß das an dem zweiten optischen Element modulierte Streulichtsignal einem zweiten Fotoempfänger zur Erzeugung eines zweiten Meßsignals zugeleitet wird.

**14.** Verfahren nach einem der Ansprüche 1 bis 13, **dadurch gekennzeichnet**, daß das Meßvolumen auf ein ein Teilvolumen des Meßvolumens ausblendendes optisches Referenzelement optisch abgebildet wird, daß das durch das Referenzelement durchtretende oder an diesem reflektierte Streulicht zu einem Referenzempfänger geleitet und in diesem in ein elektrisches Referenzsignal umgewandelt wird, und daß das Meßsignal und das Referenzsignal zur Erzeugung eines bei vollständigem Vorhandensein einer Partikel im Teilvolumen aktiven Partikelerkennungssignals logisch miteinander verknüpft werden.

**15.** Verfahren zur optischen Erfassung und Auswertung von Streulicht, das an mindestens einer durch ein mit Primärlicht beaufschlagtes Meßvolumen hindurchbewegten Partikel gestreut, in einem räumlich wechselnden Hell-Dunkel-Feld unter Erzeugung eines mit einer Schwebung überlagerten pulsförmigen Streulichtsignals moduliert und in einem Fotoempfänger zum Zwecke der Auswertung in ein entsprechend moduliertes pulsförmiges elektrisches Meßsignal umgewandelt wird, **dadurch gekennzeichnet**, daß das Meßvolumen auf ein ein Teilvolumen des Meßvolumens ausblendendes optisches Referenzelement optisch abgebildet wird, daß das durch das Referenzelement durchtretende oder an diesem reflektierte Streulicht zu einem Referenzempfänger geleitet und in diesem in ein elektrisches Referenzsignal umgewandelt wird, und daß das Meßsignal und das Referenzsignal zur Erzeugung eines bei vollständigem Vorhandensein einer Partikel im Teilvolumen aktiven Partikelerkennungssignals logisch miteinander verknüpft werden.

**16.** Verfahren nach Anspruch 14 oder 15, **dadurch gekenn**zeichnet, daß der relative Amplitudenverlauf des Meßsignals bei aktivem Partikelerkennungssignal zur Bestimmung der Partikelgröße ausgewertet wird.

**17.** Verfahren nach Anspruch 16, **dadurch gekennzeichnet**, daß die Partikelgröße bei bekanntem Streifenabstand des optischen Elements als Funktion der relativen Welligkeit, insbesondere als Funktion des Verhältnisses zwischen den Amplituden der Einhüllenden und der Schwebung des Meßsignals bestimmt wird.

**18.** Verfahren nach Anspruch 14 oder 15, **dadurch gekennzeichnet**, daß die Intensitätsverteilung des von einer Partikel ausgesandten Streulichts $I_s(y)$ senkrecht zum Strichmuster (y-Richtung) aus dem Meßsignal $S(t)$ nach folgender Beziehung bestimmt wird:

$$I_s(y) = F^{-1}(F(S)(F(g))^{-1})(y)$$

wobei g die Gitterfunktion des Strichmusters, F die Fouriertransformation und $F^{-1}$ die inverse Fouriertransformation bedeuten.

19. Verfahren nach Anspruch 18, **dadurch gekennzeichnet**, daß der zwei- oder dreidimensionale Verlauf der Intensitätsverteilung der Streustrahlung aus zwei oder drei von zueinander nichtparallelen, vorzugsweise zueinander senkrechten Strichmusterausrichtungen resultierenden Meßsignalen bestimmt wird.

20. Verfahren nach Anspruch 18 oder 19, **dadurch gekennzeichnet**, daß die Partikelgröße aus der räumlichen Intensitätsverteilung des von der Partikel ausgesandten Streulichts bestimmt wird.

21. Verfahren nach Anspruch 19, **dadurch gekennzeichnet**, daß die Partikelform aus der zwei- oder dreidimensionalen Intensitätsverteilung bestimmt wird.

22. Verfahren zur optischen Erfassung und Auswertung von Streulicht, das an mindestens einer durch ein mit Primärlicht beaufschlagtes Meßvolumen hindurchbewegten Partikel gestreut und in einem Fotoempfänger zum Zwecke der Auswertung in ein entsprechendes elektrisches Meßsignal umgewandelt wird, **dadurch gekennzeichnet**, daß das Meßvolumen im wesentlichen gleichmäßig mit dem Primärlicht ausgeleuchtet und auf ein außerhalb des Meßvolumens angeordnetes optisches Element mit einer Vielzahl von im Abstand voneinander angeordneten Fotoempfangselementen abgebildet wird, und daß das auf dem optischen Element einen bewegten Leuchtfleck bildende Streulicht in den Fotoempfangselementen in der zeit- und ortsabhängigen Partikelbewegung entsprechende Meßsignale umgewandelt wird.

23. Verfahren nach Anspruch 22, **dadurch gekennzeichnet**, daß das Streulicht auf ein ein- oder zweidimensionales Fotodioden-Array abgebildet wird.

24. Verfahren nach Anspruch 22, **dadurch gekennzeichnet**, daß das Streulicht auf einen ein- oder zweidimensionalen CCD-Bildempfänger abgebildet wird.

25. Verfahren nach einem der Ansprüche 22 bis 24, **dadurch gekennzeichnet**, daß die Meßsignale der einzelnen Fotoempfangselemente unter Bestimmung der Partikelgeschwindigkeit und/oder Partikelgröße und/oder Partikelform und/oder Partikelflugrichtung ausgewertet werden.

26. Verfahren nach einem der Ansprüche 1 bis 25 **dadurch gekennzeichnet**, daß das aus dem Meßvolumen austretende Streulicht an einem Strahlteiler mit räumlich veränderlichem Transmissions- und Reflexionsvermögen in einen durchgelassenen und einen reflektierten Teil aufgeteilt und je einem Fotoempfänger zugeleitet wird, und daß der zeitliche Intensitätsverlauf der an den Fotoempfängern abgegriffenen Meßsignale zum Zwecke der Richtungsdiskriminierung miteinander verglichen wird.

27. Verfahren zur optischen Erfassung und Auswertung von Streulicht, das an mindestens einer durch ein Primärlicht beaufschlagtes Meßvolumen hindurchbewegten Partikel gestreut und in einem Fotoempfänger zum Zwecke der Auswertung in ein entsprechendes Meßsignal umgewandelt wird, **dadurch gekennzeichnet**, daß das aus dem Meßvolumen austretende Streulicht an einem Strahlteiler mit räumlich veränderlichem Transmissions- und Reflexionsvermögen in einen durchgelassenen und einen reflektierten Teil aufgeteilt und je einem Fotoempfänger zugeleitet wird, und daß der zeitliche Intensitätsverlauf der an den Fotoempfängern abgegriffenen Meßsignale zum Zwecke der Richtungsdiskriminierung miteinander verglichen wird.

28. Verfahren nach Anspruch 26 oder 27, **dadurch gekennzeichnet**, daß die an den Fotoempfängern abgegriffenen Meßsignale durch Quotientenbildung und/oder Differenzbildung ihres zeitabhängigen Intensitätsverlaufs miteinander verglichen werden.

29. Verfahren nach einem der Ansprüche 26 bis 28, **dadurch gekennzeichnet**, daß das Transmissions-und Reflexionsvermögen des Strahlteilers in einer mit dem Strahlengang einen Winkel einschließenden Raumrichtung monoton stetig oder sprunghaft variieren.

30. Verfahren nach einem der Ansprüche 26 bis 29, **dadurch gekennzeichnet**, daß das Meßvolumen auf den Strahlteiler optisch abgebildet bzw. fokussiert wird.

31. Verfahren nach einem der Ansprüche 26 bis 29, **dadurch gekennzeichnet**, daß das Meßvolumen über den Strahlteiler auf die beiden Fotoempfänger optisch abgebildet bzw. fokussiert wird.

32. Anordnung zur optischen Erfassung und Auswertung von Streulicht, das an mindestens einer durch ein mit Primärlicht beaufschlagtes Meßvolumen hindurchbewegten Partikel gestreut, in einem räumlich wechselnden Hell-Dunkel-Feld unter Erzeugung eines mit einer Schwebung überlagerten pulsförmigen Streulichtsignals modulierbar und in einem Fotoempfänger zum Zwecke der Auswertung in ein entsprechend moduliertes pulsförmiges elektrisches Meßsignal umwandelbar ist, **dadurch gekennzeichnet**, daß das Meßvolumen (2) im wesentlichen gleichmäßig mit Primärlicht (3) ausleuchtbar und über eine Abbildungsoptik (5, 10) und eine im Strahlengang (4) der Abbildungsoptik angeordnete, das Meßvolumen (2) begrenzende Blende (11) auf ein außerhalb des Meßvolumens (2) angeordnetes optisches Element (7) mit räumlich wechselnder Lichtdurchlässigkeit oder Reflexionsfähigkeit optisch abbildbar ist, und daß der Fotoempfänger (9) dem optischen Element (7) so zugeordnet ist, daß er das von diesem durchgelassene oder reflektierte Streulicht integrierend aufnimmt.

33. Anordnung nach Anspruch 32, **dadurch gekennzeichnet**, daß das Meßvolumen (2) mit inkohärentem Primärlicht (3) ausleuchtbar ist.

34. Anordnung nach Anspruch 32 oder 33, **dadurch gekennzeichnet**, daß das Meßvolumen (23) mit nichtmonochromatischem Primärlicht (3) ausleuchtbar ist.

35. Anordnung nach einem der Ansprüche 32 bis 34, **dadurch gekennzeichnet**, daß das optische Element (7) ein Strichmuster mit räumlich wechselnder Lichtdurchlässigkeit oder Reflexionsfähigkeit aufweist.

36. Anordnung nach Anspruch 35, **dadurch gekennzeichnet**, daß das Strichmuster als optisches Strichgitter ausgebildet ist.

37. Anordnung nach Anspruch 35, **dadurch gekennzeichnet**, daß das Strichmuster durch ein LCD-Array gebildet ist.

38. Anordnung nach Anspruch 35, **dadurch gekennzeichnet**, daß das Strichmuster durch ein optisches Speicher-Array gebildet ist.

39. Anordnung nach einem der Ansprüche 35 bis 38, **dadurch gekennzeichnet**, daß die transparenten und nichttransparenten bzw. die reflektierenden und nichtreflektierenden Bereiche des Strichmusters gleichbreit sind.

40. Anordnung nach einem der Ansprüche 35 bis 39, **dadurch gekennzeichnet**, daß der Strichabstand über das gesamte Strichmuster konstant ist.

41. Anordnung nach einem der Ansprüche 35 bis 40, **dadurch gekennzeichnet**, daß die Ausrichtung des Strichmusters umsteuerbar ist.

42. Anordnung nach Anspruch 41, **dadurch gekennzeichnet**, daß die Ausrichtung des Strichmusters durch elektronische Mittel unter Beeinflussung der lokalen Absorptions bzw. Transmissionseigenschaften des optischen Elements (7) umsteuerbar ist.

43. Anordnung nach einem der Ansprüche 32 bis 42, **dadurch gekennzeichnet**, daß das Meßvolumen (2) über einen im Strahlengang (4) der Abbildungsoptik (5, 10) hinter der Blende (11) angeordneten Strahlteiler auf ein gegenüber dem optischen Element (7) hinsichtlich seiner räumlich wechselnden Lichtdurchlässigkeit oder Reflexionsfähigkeit anders, vorzugsweise senkrecht, ausgerichtetes zweites optisches Element optisch abbildbar ist, und daß dem zweiten optischen Element ein zweiter Fotoempfänger so zugeordnet ist, daß er das von diesem durchgelassene oder reflektierte Licht integrierend aufnimmt.

44. Anordnung nach einem der Ansprüche 32 bis 43, **dadurch gekennzeichnet**, daß das Meßvolumen (2) vorzugsweise über einen im Strahlengang (4) der Abbildungsoptik (5, 10) hinter der Blende (11) angeordneten Strahlteiler (12) auf ein ein Teilvolumen (1) des Meßvolumens (2) ausblendendes optisches Referenzelement (19) optisch abbildbar ist, daß dem Referenzelement (19) ein Referenzempfänger (17) so zugeordnet ist, daß er das durch dieses durchgehende oder an diesem reflektierte Licht räumlich integrierend aufnimmt und in ein elektrisches Referenzsignal umwandelt, und daß eine mit dem Meßsignal (S) und dem Referenzsignal ($S_{R1}$, $S_{R2}$) beaufschlagte Verknüpfungslogik (41, 42, 43, 44, 46, 48) vorgesehen ist, an deren Ausgang (A) ein bei Vorhandensein einer Partikel im Teilvolumen aktives Partikelerkennungssignal abgreifbar ist.

45. Anordnung nach Anspruch 44, **gekennzeichnet durch** eine mit dem Meßsignal und dem Partikelerkennungssignal beaufschlagbare Auswerteschaltung zur Bestimmung der Partikelgröße in Abhängigkeit von der Welligkeit, insbesondere als Funktion des Amplitudenverhältnisses zwischen Einhüllender und Schwebung des Meßsignals.

46. Anordnung nach einem der Ansprüche 32 bis 38, **dadurch gekennzeichnet**, daß die räumlich wechselnde Lichtdurchlässigkeit oder Reflexionsfähigkeit des optischen Elements (7) zum Zwecke der Richtungsdiskriminierung unsymmetrisch ausgebildet ist.

47. Anordnung nach Anspruch 46, **dadurch gekennzeichnet**, daß auf einer Seite des Strichmusters mindestens ein transparenter oder nichttransparenter Strich fehlt oder durch einen komplementären Strich ersetzt ist.

48. Anordnung nach einem der Ansprüche 44 bis 47, **dadurch gekennzeichnet**, daß das Referenzelement (19) und der zugehörigen Referenzempfänger (17) zum Zwecke der Richtungsdiskriminierung mindestens zweigeteilt sind, wobei die an den betreffenden Referenzempfängern abgreifbaren Referenzsignale ($S_{R1}$, $S_{R2}$) sich zu dem gesamten Referenzsignal ergänzen.

49. Anordnung zur optischen Erfassung und Auswertung von Streulicht, das an mindestens einer durch ein mit Primärlicht beaufschlagtes Meßvolumen hindurchbewegten Partikel gestreut und in einem Fotoempfänger zum Zwecke der Auswertung in ein entsprechendes elektrisches Meßsignal umgewandelt wird, **dadurch gekennzeichnet**, daß das Meßvolumen (2) im wesentlichen gleichmäßig mit Primärlicht (3) ausleuchtbar und über eine Abbildungsoptik (5, 10) und eine im Strahlengang (4) der Abbildungsoptik angeordnete, das Meßvolumen (2) begrenzende Blende (11) auf ein außerhalb des Meßvolumens angeordnetes optisches Element (7) mit einer Vielzahl von im Abstand voneinander angeordneten Fotoempfangselementen abbildbar ist, und daß das auf dem optischen Element (7) einen bewegten Leuchtfleck bildende Streulicht in den Fotoempfangselementen in der zeit- und ortsabhängigen Partikelbewegung entsprechende Meßsignale umwandelbar ist.

50. Anordnung nach Anspruch 49, **dadurch gekennzeichnet**, daß das optische Element ein die Fotoempfangselemente enthaltendes, ein- oder zweidimensionales Fotodioden-Array aufweist.

51. Anordnung nach Anspruch 49, **dadurch gekennzeichnet**, daß das optische Element (7) einen die Fotoempfangselemente enthaltenden, ein- oder zweidimensionalen CCD-Bildempfänger aufweist.

52. Anordnung nach einem der Ansprüche 49 bis 51, **gekennzeichnet durch** eine mit den Meßsignalen der Fotoempfangselemente beaufschlagte Auswerteelektronik zur Bestimmung der Partikelgeschwindigkeit und/oder Partikelgröße und/oder Partikelform und/oder Partikel-Flugrichtung.

53. Anordnung nach einem der Ansprüche 32 bis 52, **dadurch gekennzeichnet**, daß im Stahlengang (4) hinter dem Meßvolumen (2) ein das Streulicht auf zwei Fotoempfänger (9, 17) aufteilender Strahlteiler (12) mit räumlich variierendem Transmissions- und Reflexionsvermögen angeordnet ist.

54. Anordnung zur optischen Erfassung und Auswertung von Streulicht, das an mindestens einer durch ein mit Primärlicht beaufschlagtes Meßvolumen hindurchbewegten Partikel gestreut und in einem Fotoempfänger zum Zwecke der Auswertung in ein entsprechendes elektrisches Meßsignal umgewandelt wird, **dadurch gekennzeichnet**, daß im Strahlengang (4) hinter dem Meßvolumen (2) ein das Streulicht auf zwei Fotoempfänger (9, 17) aufteilender Strahlteiler (12) mit räumlich variierendem Teilungsverhältnis (Transmissionsvermögen/Reflexionsvermögen) angeordnet ist.

55. Anordnung nach Anspruch 53 oder 54, **dadurch gekennzeichnet**, daß das Teilungsverhältnis des Strahlteilers (12) in einer Raumrichtung monoton stetig oder sprunghaft variiert.

56. Anordnung nach einem der Ansprüche 53 bis 55, **dadurch gekennzeichnet**, daß die an den Fotoempfängern (9, 17) abgreifbaren zeitabhängigen Meßsignale in einer Auswerteanordnung durch Quotienten und/oder Differenzbildung zum Zwecke der Richtungsdiskriminierung miteinander verknüpfbar sind.

57. Anordnung nach einem der Ansprüche 53 bis 56, **gekennzeichnet durch** mindestens zwei räumlich unterschiedlich orientierte Strahlteiler mit räumlich variierendem Teilungsverhältnis zum Zwecke der Richtungsdiskriminierung mehrerer Geschwindigkeitskomponenten.

Fig. 1

Fig. 2

Fig. 3

Fig. 4

Fig. 5

Fig. 6

EP 0 467 127 A2

Fig. 7